# EUROPEAN PATENT APPLICATION

(11) **EP 3 667 468 A1**
(43) Date of publication of application: **17.06.2020**
(21) Application number: 18843918.6
(22) Date of filing: 03.07.2018
(51) Int. Cl.: G06F 3/041

(54) **DRIVE METHOD FOR TOUCH DISPLAY PANEL**

(30) Priority: 11.08.2017 CN 201710685330
(71) Applicant: BOE Technology Group Co., Ltd., Beijing 100015 (CN)
(72) Inventor: XUAN, Minghua, Beijing 100176 (CN); CHEN, Xiaochuan, Beijing 100176 (CN); YANG, Shengji, Beijing 100176 (CN); LU, Pengcheng, Beijing 100176 (CN); WANG, Lei, Beijing 100176 (CN); XIAO, Li, Beijing 100176 (CN); FU, Jie, Beijing 100176 (CN)
(74) Representative: Brötz, Helmut
(86) International application number: PCT/CN2018/094239
(87) International publication number: WO 2019/029298

(57) **Abstract**

Provided is a drive method for a touch display panel. The touch display panel comprises a plurality of regions (101), each region (101) comprising a region electrode (12). Said drive method comprises: a frame time comprising a plurality of display time periods (DTP); in each display time period (DTP), the plurality of regions (101) including display regions (DR) which perform displaying in the display time period (DTP), the regions except the display regions (DR) in the display time period being non-display regions (NDR) which do not perform displaying; the display regions (DR) in the display time period (DTP) including at least one region in the plurality of regions (101); applying, in each display time period (DTP), a display signal to the region electrodes (12) of the display regions (DR) in the display time period (DTP); in at least one display time period (DTP), the non-display regions (NDR) including at least one region (101), and applying a touch signal to the region electrode (12) of at least one region of the non-display regions (NDR) in the display time period (DTP); and/or, inserting a touch time period (TTP) between any adjacent display time periods (DTP), and applying, during the touch time period (TTP), a touch signal to the region electrode (12) of at least one region (101). The drive method for a touch display panel can achieve intra-frame touch.

## Description

### CROSS REFERENCE TO RELATED APPLICATIONS

The present application claims priority to Chinese patent application No. 201710685330.2 filed on August 11, 2017, the entire disclosure of which is incorporated herein by reference as part of the present application.

### TECHNICAL FIELD

At least one embodiment of the present disclosure relates to a driving method of a touch display panel.

### BACKGROUND

Organic Light-Emitting Diode (OLED) device is considered as the next generation of display technology for advantages such as self-luminescence, fast response, wide viewing angle, high brightness, vivid color, and light weight compared with liquid crystal display (LCD).

### SUMMARY

At least one embodiment of the present disclosure relates to a driving method of a touch display panel.

At least one embodiment of the present disclosure provides a driving method of a touch display panel, the touch display panel includes a plurality of regions, and each of the plurality of regions includes a regional electrode. The driving method includes: one frame time including a plurality of display time periods, during each of the plurality of display time periods, the plurality of regions including a display region performing display during the display time period, and a region other than the display region performing display during the display time period being a non-display region not performing display, the display region during the display time period including at least one region of the plurality of regions; and during each of the plurality of display time periods, applying a display signal to the regional electrode of the display region during the display time period. The method satisfies at least one of: during at least one display time period, the non-display region including at least one region, applying a touch signal to the regional electrode of at least one region included in the non-display region during the display time period; and inserting a touch time period between at least two display time periods, and applying a touch signal to the regional electrode of at least one region.

According to the driving method of the touch display panel provided by an embodiment of the present disclosure, the display region varies depending on the display time period.

According to the driving method of the touch display panel provided by an embodiment of the present disclosure, during at least one display time period, the touch signal is applied to the regional electrode of every non-display region during the display time period.

According to the driving method of the touch display panel provided by an embodiment of the present disclosure, the touch signal is applied to the regional electrode of every non-display region during each of the plurality of display time periods.

According to the driving method of the touch display panel provided by an embodiment of the present disclosure, the touch signal is applied to the regional electrode of every region during the touch time period.

According to the driving method of the touch display panel provided by an embodiment of the present disclosure, the touch time period is inserted between every two adjacent display time periods.

According to the driving method of the touch display panel provided by an embodiment of the present disclosure, the touch signal is applied to the regional electrode of every region between every two adjacent display time periods.

According to the driving method of the touch display panel provided by an embodiment of the present disclosure, the one frame time includes a first display time period and a last display time period, the touch time period is inserted before the first display time period or after the last display time period.

According to the driving method of the touch display panel provided by an embodiment of the present disclosure, the regional electrode includes a plurality of first electrodes insulated from each other, and the touch display panel is an organic light-emitting diode (OLED) display panel, a cathode of the OLED is used as the first electrode at the same time.

According to the driving method of the touch display panel provided by an embodiment of the present disclosure, it further includes: inputting different display signals to the regional electrodes of different regions during one frame time.

According to the driving method of the touch display panel provided by an embodiment of the present disclosure, each of the plurality of first electrodes of every regional electrode is connected to a first driving circuit through a first wire; and an absolute value of the display signal applied to every first electrode of each of the regional electrodes is increased as a length of the first wire connected thereto is increased.

According to the driving method of the touch display panel provided by an embodiment of the present disclosure, every regional electrode is connected to a second driving circuit through a second wire, and an absolute value of the display signal applied to the regional electrode is increased as a length of the second wire is increased.

According to the driving method of the touch display panel provided by an embodiment of the present disclosure, the plurality of regions are arranged in a first direction.

According to the driving method of the touch display panel provided by an embodiment of the present disclosure, the display signal is a negative level signal and the touch signal is a positive level signal.

According to the driving method of the touch display panel provided by an embodiment of the present disclosure, during each of the display time periods, at least one region of the plurality of regions performs display.

### BRIEF DESCRIPTION OF THE DRAWINGS

Hereinafter, the drawings accompanying embodiments of the present disclosure are simply introduced in order to more clearly explain technical solution(s) of the embodiments of the present disclosure. Obviously, the described drawings below are merely related to some of the embodiments of the present disclosure without constituting any limitation thereto.
FIG. 1 is a plan view illustrating a cathode of an OLED display panel;
FIG. 2 is a plan view illustrating a plurality of cathodes upon being divided in an OLED display panel provided by an embodiment of the present disclosure;
FIG. 3A is a schematic diagram illustrating a plurality of regions obtained by dividing a touch display panel provided by an embodiment of the present disclosure;
FIG. 3B is a schematic diagram illustrating a connection between a first electrode and a first driving circuit in a touch display panel provided by an embodiment of the present disclosure;
FIG. 3C is a schematic diagram illustrating a regional gate line (scanning line) in each of the regions and a connection between a regional electrode and a second driving circuit of a touch display panel provided by an embodiment of the present disclosure;
FIG. 4 is a schematic diagram illustrating a pixel corresponding to each of the regions of a touch display panel provided by an embodiment of the present disclosure;
FIG. 5 is a cross-sectional view of a pixel in a touch display panel provided by an embodiment of the present disclosure;
FIG. 6 is a schematic diagram of a pixel circuit in a touch display panel provided by an embodiment of the present disclosure;
FIG. 7 is a schematic diagram of a driving method of a touch display panel provided by an embodiment of the present disclosure;
FIG. 8 is a schematic diagram illustrating a plurality of display time periods included in one frame time of a driving method of a touch display panel provided by an embodiment of the present disclosure;
FIG. 9A is a schematic diagram of a driving method of a touch display panel provided by an embodiment of the present disclosure;
FIG. 9B is a schematic diagram of a driving method of a touch display panel provided by another embodiment of the present disclosure;
FIG. 10A is a schematic diagram illustrating inserting a touch time period between adjacent display time periods in a driving method of a touch display panel provided by another embodiment of the present disclosure;
FIG. 10B is a schematic diagram illustrating inserting a touch time period between adjacent display time periods in a driving method of a touch display panel provided by another embodiment of the present disclosure;
FIG. 11 is a schematic diagram of a driving method of a touch display panel provided by an embodiment of the present disclosure;
FIG. 12 is a schematic diagram of a driving method of a touch display panel provided by an embodiment of the present disclosure; and
FIG. 13 is a schematic diagram of a driving method of a touch display panel provided by an embodiment of the present disclosure.

### DETAILED DESCRIPTION

In order to make objects, technical details and advantages of the embodiments of the present disclosure apparent, the technical solutions of the embodiments will be described in a clearly and fully understandable way in connection with the drawings related to the embodiments of the present disclosure. Apparently, the described embodiments are just a part but not all of the embodiments of the present disclosure. Based on the described embodiments herein, those skilled in the art can obtain other embodiment(s), without any inventive work, which should be within the scope of the present disclosure.

Unless otherwise defined, all the technical and scientific terms used herein have the same meanings as commonly understood by one of ordinary skill in the art to which the present disclosure belongs. The terms "first," "second," etc., which are used in the present disclosure, are not intended to indicate any sequence, amount or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not limited to define a physical connection or mechanical connection, but may include an electrical connection, directly or indirectly. "On," "under," "right," "left" and the like are only used to indicate relative position relationship, and when the position of the object which is described is changed, the relative position relationship may be changed accordingly.

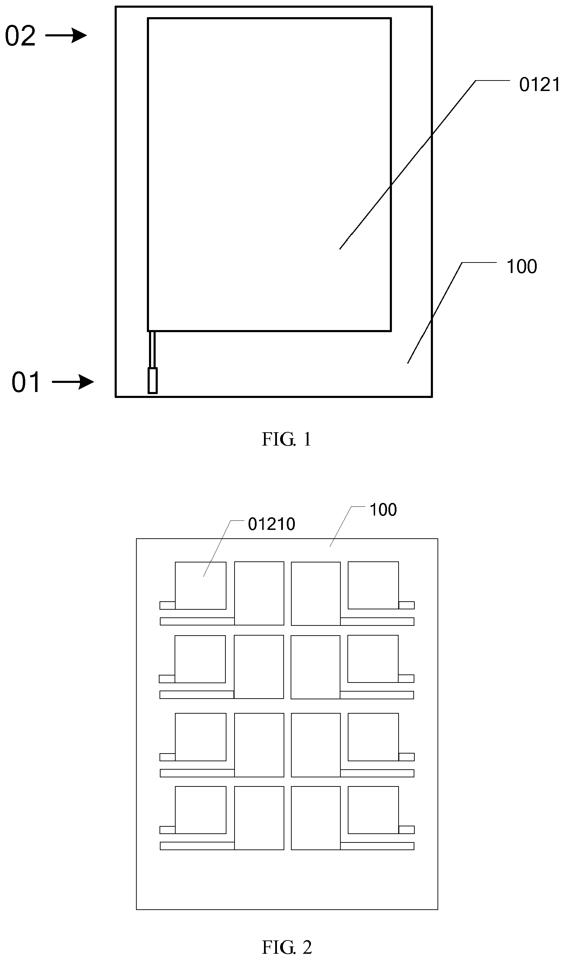

FIG. 1 provides a top view of a touch display panel. A cathode 0121 is disposed on a base substrate 100, and the cathode 0121 is in a flat structure. For example, a cathode of a top-emission organic light-emitting diode (OLED) panel may adopt a transflective cathode, and a material of the transflective cathode includes, for example, Mg/Ag, etc. However, the transflective cathode has a larger resistance, a more obvious IR drop effect and higher power consumption. Due to the IR drop of the cathode, a phenomenon of uneven brightness is prone to be occurred at a voltage input starting side and a voltage input ending side, that is, an end 01 bonded with integrated circuit (IC) and an end 02 opposite to IC (the other end opposite to the end bonded with IC), and a phenomenon of color shift is prone to be occurred at the end 02 opposite to IC. For example, in FIG. 1, a lower side of the touch display panel is the end bonded with IC, and an upper side of the touch display panel is the end 02 opposite to IC.

As illustrated in FIG. 2, when an active-matrix organic light-emitting diode (AMOLED) display panel (for example, a top-emission AMOLED display panel) is provided with a built-in touch function (Full In Cell, FIC), a cathode is split into parts to be used as a touch sensor. However, upon the cathode being split, the touch function can only be activated in a non-display state when the screen is not illuminated (to avoid an influence on the cathode resulted by a change in capacitance due to touch, which may further affect the display); therefore, the counts as reported and the touch accuracy during touch are limited. Currently, in a single frame, a sensing of a touch function can only be performed for one time before or after displaying. FIG. 2 illustrates the case in which a plurality of cathodes 01210 independent from each other is provided by division. The plurality of cathodes 01210 are insulated from each other.

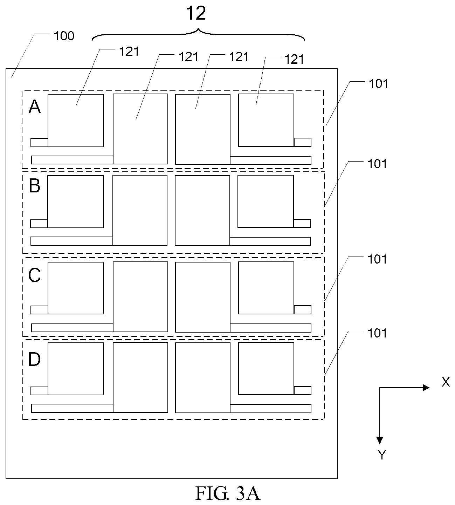

FIG. 3A illustrates a touch display panel provided by an embodiment of the present disclosure. The touch display panel may include a plurality of regions 101 (n regions) arranged along a first direction Y, where n is an integer greater than 1. FIG. 3A is illustrated with reference to the case where n=4, that is, the touch display panel includes four regions, which are region A, region B, region C and region D, respectively, by way of example. Each of the regions 101 includes a regional electrode 12, which may include a plurality of first electrodes 121 insulated from each other.

For example, as illustrated in FIG. 3A, the plurality of first electrodes 121 may be arranged in at least one row in a second direction X. The plurality of first electrodes 121 may be arranged in a single row; or may be arranged in an array, that is, arranged in a plurality of rows. For example, the plurality of first electrodes 121 are arranged along the first direction Y and the second direction X, respectively; or the plurality of first electrodes 121 are arranged along the second direction X, and the second direction X is intersected with the first direction Y. For example, the second direction X is perpendicular to the first direction Y. FIG. 3A is described with reference to the case where the plurality of first electrodes 121 in every region are arranged in a row, by way of example, without limited thereto. The number of the regional electrode 12 and the number of the first electrodes 121 included in the regional electrode 12 are not limited to that illustrated in FIG. 3A. For example, the plurality of first electrodes 121 are not limited to be arranged in an array of 4×4, and arrays with other numbers of rows and/or columns may be formed in accordance with the size of the display panel and the touch requirements.

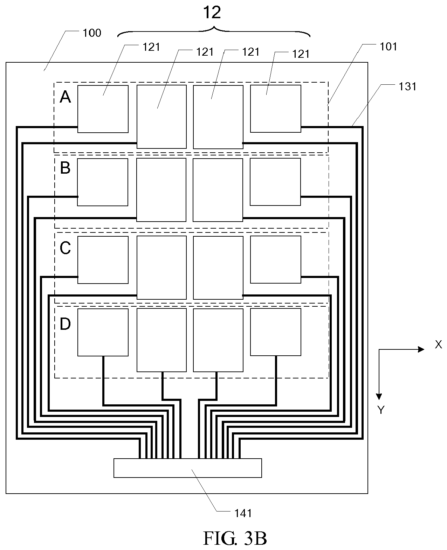

FIG. 3B is a schematic diagram illustrating a connection between a plurality of first electrodes and a first driving circuit in a touch display panel provided by an embodiment of the present disclosure. For example, as illustrated in FIG. 3B, each of the plurality of first electrodes 121 is connected to a first driving circuit 141 through a first wire 131. The first driving circuit 141 may be configured to input a display signal and/or a touch signal to each of the first electrodes 121. For example, the first driving circuit 141 is configured to input a display signal and a touch signal to different first electrodes 121, respectively, during a same time period; or the first driving circuit 141 is configured to input a display signal and a touch signal to a same first electrode 121 during different time periods.

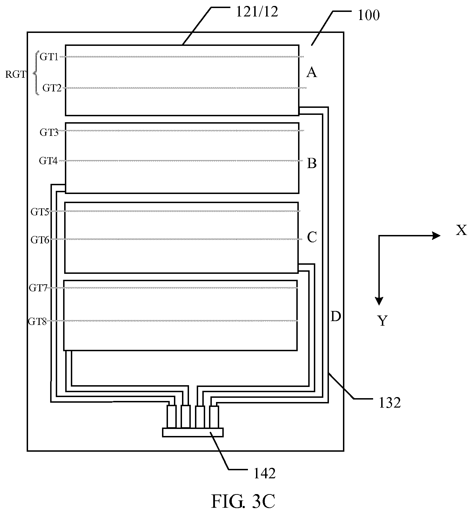

For example, the same region 101 may be input with the same display signal during the same display time period. For example, the same region 101 is input with a display signal through a first wire 131 connected to each of the first electrodes 121; or, as illustrated in FIG. 3C, the plurality of first electrodes 121 of each of the regional electrodes 12 may be electrically connected together, and then be connected to a second drive circuit 142 through a second wire 132. The second driving circuit 142 may be configured to input a display signal to each of the regional electrodes 12. The second wire 132 and the second driving circuit 142 may be not provided. Each of the first electrodes 121 may function as a touch sensor to sense and transmit a touch position.

For example, as illustrated in FIG. 3C, the first electrodes 121 included in each of the regional electrodes may also be arranged along the first direction Y and extending along the first direction X to be used as a driving sensor, and another group of inductive sensors intersected with and insulated from the plurality of first electrodes is further provided, so as to achieve detection of a touch position. The driving sensor and the inductive sensor are interchangeable. The embodiment of the present disclosure is described with reference to the arrangement of the first electrodes illustrated in FIG. 3B, by way of example.

As illustrated in FIG. 3C, every region may include a regional gate line RGT, and the regional gate line RGT may include at least one gate line GT, and each row of pixels 20 may be driven by one gate line GT. A total of 8 gate lines are illustrated in FIG. 3C as GT1-GT8. For example, the touch display panel may be driven by a region scanning manner, and every region of the touch display panel is driven in a row scanning manner, without limited thereto. For example, the touch display panel can be scanned from top to bottom, row by row.

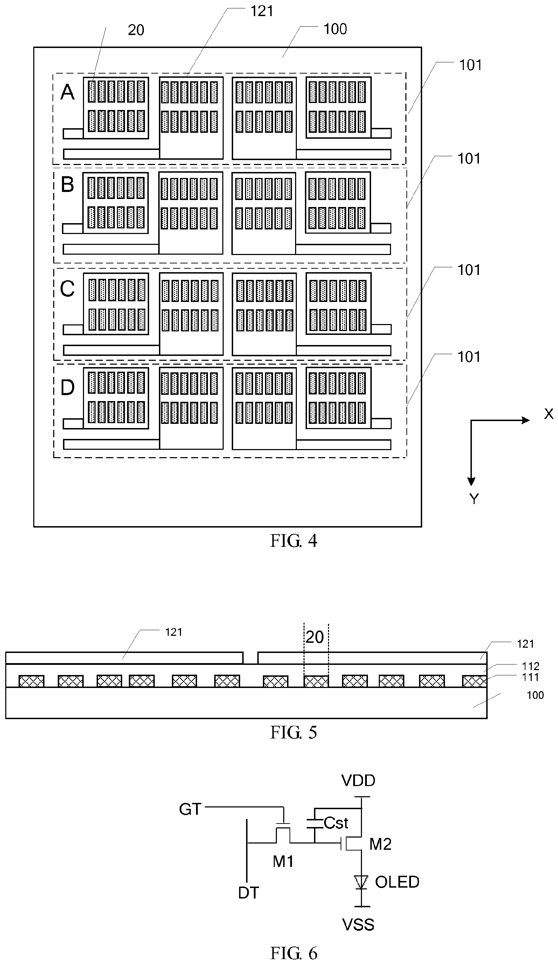

As illustrated in FIG. 4, each of the first electrodes 121 may correspond to a plurality of pixels 20, and each of the regions 101 may include at least one row of pixels 20. For example, a plurality of pixels included in each of the regions 101 may be referred to as a regional pixel RP, and the regional pixel RP includes at least one row of pixels. FIG. 4 is described with reference to the case where each of the regions 101 includes two rows of pixels 20, and each of the first electrodes 121 corresponds to two rows of pixels 20 including 12 pixels in total, by way of example, without limited thereto.

FIG. 5 is a cross-sectional view of a touch display panel provided by an embodiment of the present disclosure. The base substrate 100 is provided with second electrodes 111, light-emitting functional layers 112, and first electrodes 121, which form a plurality of pixels 20. Each of the pixels 20 may include an organic light-emitting diode (OLED). For example, the light-emitting functional layer 112 includes a light-emitting layer, and may further include other layers such as at least one selected from the group consisting of a hole injection layer, a hole transport layer, an electron transport layer, and an electron injection layer, without limited thereto. FIG. 5 illustrates two first electrodes 121 insulated from each other. Each of the first electrodes 121 may correspond to a plurality of second electrodes 111 which are insulated from each other. Each of the pixels 20 may include one second electrode 111. FIG. 5 is illustrated with reference to the case where the pixels 20 emit light of the same color, by way of example, without limited thereto. It is also possible to adjust a material of the light-emitting layer of the pixel so that different pixels can emit light of different colors. For example, the first electrode 121 may be a cathode, e.g., the first electrode 121 is a cathode of an OLED and is used as a touch sensor at the same time, and the second electrode 111 may be an anode; the embodiment of the present disclosure is described with reference to the case above, by way of example, without limited thereto. For example, in the case where the pixels 20 emit light of the same color, a full-color display can be realized by providing a color filter (CF) layer.

For example, as illustrated in FIG. 5, in the case where the first electrode 121 is a cathode and the second electrode 111 is an anode, when a voltage difference between the first electrode 121 and the second electrode 111 is less than zero, the OLED is turned on and emits light, so that the pixel can perform displaying.

For example, as illustrated in FIG. 3A and FIG. 5, the regional electrode 12 may include a plurality of first electrodes 121 insulated from each other; in the case where the touch display panel is an OLED display panel, a cathode of the OLED may be used as the first electrode 121 at the same time.

FIG. 6 is a schematic diagram illustrating a pixel circuit of a touch display panel provided by an embodiment of the present disclosure. The touch display panel includes a selective thin film transistor (TFT) M1, a driving TFT M2, and a storage capacitor Cst. When M1 is addressed (selected) by the gate line GT used as a scanning line, the M1 is turned on, a voltage Vdt on the data line DT is transferred to a gate electrode of M2; and when M1 is not addressed (selected) by the gate line GT used as the scanning line, the voltage Vdt would be sustained on the gate electrode of M2 due to the existence of the storage capacitor Cst. When M2 is turned on, a pixel voltage VDD can be transferred to the second electrode 111 of the OLED. When a voltage difference exists between the first electrode 121 and the second electrode 111 (VDD is not equal to VSS), the OLED can emit light. For example, the OLED is turned on when a forward bias is formed between the first electrode 121 and the second electrode 111, and the OLED is turned off when a reverse bias is formed between the first electrode 121 and the second electrode 111 (unidirection conduction). The embodiment of the present disclosure is described by taking the pixel circuit illustrated in FIG. 6 as an example, but the pixel circuit of the touch display panel provided by the embodiment of the present disclosure is not limited to that illustrated in FIG. 6.

For example, in the case where the first electrode 121 is a cathode and the second electrode 111 is an anode, if a voltage on the second electrode 111 is 0 or a positive voltage, the OLED can be turned on upon a negative voltage being input to the first electrode 121, and the OLED can be turned off without emitting light upon a positive voltage greater than or equal to a voltage on the second electrode 111 being input to the first electrode 121. For example, the OLED emits light upon the first electrode 121 of the OLED being applied with a negative voltage, and a brightness of the OLED may vary depending on a value of the negative voltage applied to the first electrode 121.

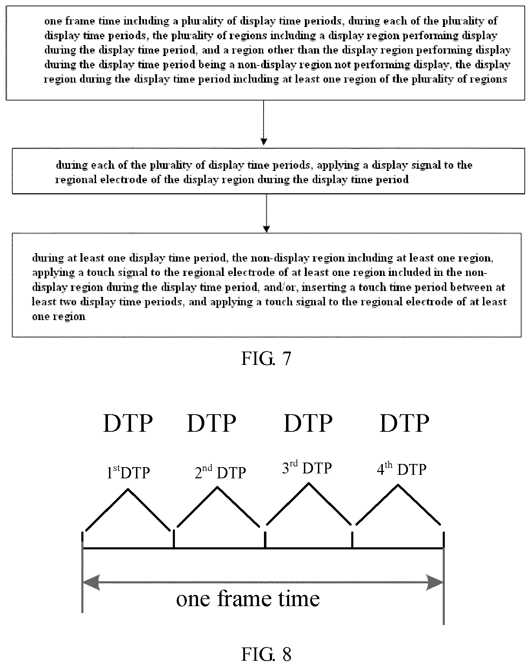

As illustrated in FIG. 7, at least one embodiment of the present disclosure provides a driving method of a touch display panel. The touch display panel includes a plurality of regions, each of the regions includes a regional electrode, and the driving method includes: one frame time including a plurality of display time periods, during each of the plurality of display time periods, the plurality of regions including a display region performing display during the display time period, and a region other than the display region performing display during the display time period being a non-display region, the display region during the display time period including at least one of the plurality of regions; during each of the plurality of display time periods, applying a display signal to the regional electrode of the display region during the display time period; during at least one display time period, the non-display region including at least one region, applying a touch signal to the regional electrode of at least one region of the non-display region during the display time period; and/or, inserting a touch time period between at least two adjacent display time periods, applying a touch signal to the regional electrode of at least one region during the touch time period.

Therefore, the driving method of the touch display panel provided by at least one embodiment of the present disclosure can detect a touch position between display time periods in one frame or detect a touch position during the display time period, can improve the number and/or time of touch within one frame, and can improve the number of touch reports and touch accuracy. For example, the detection of the touch position during the display time period refers to that the touch position detection is performed in a part of the region where the display is not performed when another part of the region performs display.

Further explanation is given below.

An embodiment of the present disclosure provides a driving method of a touch display panel, which includes the following.

As illustrated in FIG. 8, one frame time includes a plurality of display time periods (DTP). FIG. 8 is described with reference to the case where four display time periods are included in one frame time, by way of example, without limited thereto. The number of display time periods DTP can be adjusted as needed. For example, the number of display time periods may be less than or equal to the number of regions.

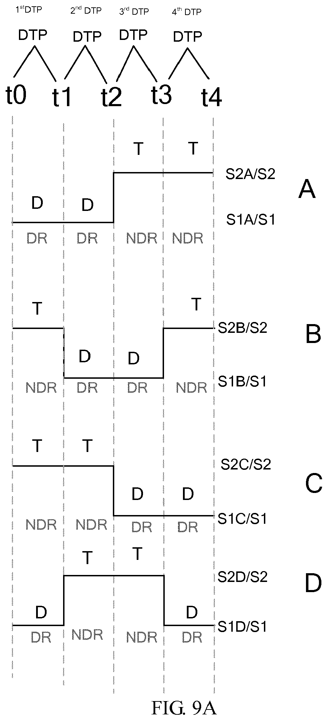

As illustrated in FIG. 9A, the plurality of regions 101 include a display region DR which performs display during one display time period, and a region other than the display region DR during the display time period is a non-display region NDR. The display region DR includes at least one of the plurality of regions, and the non-display region NDR is a region within the plurality of regions other than the display region; moreover, the non-display region may be not provided during some display time periods, which is not limited in the embodiment of the present disclosure.

As illustrated in FIG. 9A, D is a display state of one region during one time period, and T is a touch state of one region during one time period, similarly hereinafter.

For example, as illustrated in FIG. 9A, the display regions are different during different display time periods, as long as it is satisfied that there is at least one region performing display during one display time period DTP. The region performing display includes a region where a scanning is performed or a pixel is sustained. FIG. 9A is described with reference to the case where the touch display panel includes four regions, by way of example. During a first display time period (1^{st} DTP), the display region DR includes the region A and the region D, and the remaining regions (the region B and the region C) other than the region A and the region D are non-display regions NDR. During a second display time period (2^{nd} DTP), the display region DR includes the region A and the region B, and the remaining regions (the region C and the region D) other than the region A and the region B are non-display regions NDR. During a third display time period (3^{rd} DTP), the display region DR includes the region B and the region C, and the remaining regions (the region A and the region D) other than the region B and the region C are non-display regions NDR. During a fourth display time period (4^{th} DTP), the display region DR includes the region C and the region D, and the remaining regions (the region A and the region B) other than the region C and the region D are non-display regions NDR. The display region and the non-display region of each of the time periods are not limited to the enumerated cases. For example, during each of the display time periods DTP, at least one of the plurality of regions performs display. The region performing display may be a region where scanning and/or pixel sustaining is performed.

As illustrated in FIG. 9A, if four regions are sequentially scanned from time t0, a first display time period in the region A is a scanning time period, and a second display time period in the region A is in a pixel sustaining phase. A second display time period in the region B is a scanning time period, and a third display time period in the region B is in a pixel sustaining phase. A third display time period in the region C is a scanning time period, and the fourth display time period in the region C is in a pixel sustaining phase. A fourth display time period in the region D is a scanning time period, and a pixel sustaining can be performed upon the region A being scanned in the next frame. A first display time period in the region D may be a pixel sustaining phase of a previous frame.

As illustrated in FIG. 9A, in each of the display time periods, a display signal S1 is applied to the regional electrode 12 of the display region DR during the display time period DTP. For example, as illustrated in FIG. 9A, a display signal S1A may be input to the regional electrode 12 of the region A during a time period t0-t2 (including a time period t0-t1 of the region A which is a scanning time and a time period t1-t2 of the region A which is a pixel sustaining time); a display signal S1B may be input to the regional electrode 12 of the region B during a time period t1-t3 (including a time period t1-t2 of the region B which is a scanning time and a time period t2-t3 of the region B which is a pixel sustaining time); a display signal S1C may be input to the regional electrode 12 of the region C during a time period t2-t4 (including a time period t2-t3 of the region C which is a scanning time and a time period t3-t4 of the region C which is a pixel sustaining time); and a display signal S1D may be input to the regional electrode 12 of the region D during the a time period t3-t4 and the time period t0-t1 (the time period t3-t4 of the region D is a scanning time and the time period t0-t1 is a pixel sustaining time of a previous frame of image), and an embodiment of the present disclosure is described with reference to this case as an example. During each of the display time periods, the plurality of regions may include a display region DR in which display is performed during the display time period and a non-display region NDR in which display is not performed during the display time period.

As illustrated in FIG. 9A, during at least one display time period DTP, a touch signal S2 is applied to the regional electrode 12 of at least one of the non-display regions NDR during the display time period. For example, as illustrated in FIG. 9A, a touch signal S2B is input to the region B and a touch signal S2C is input to the region C during the time period tO-tl; a touch signal S2C is input to the region C and a touch signal S2D is input to the region D during the time period t1-t2; a touch signal S2A is input to the region A and a touch signal S2D is input to the region D during the time period t2-t3; and a touch signal S2A is input to the region A and a touch signal S2B is input to the region B during the time period t3-t4.

Therefore, the driving method of the touch display panel provided by at least one embodiment of the present disclosure can realize the detection of the touch position during the display time period of one frame (touching while displaying), can improve the number and/or time of touches within one frame, and can improve the number of touch reports and touch accuracy. Because the regional electrodes are provided regionally, during one frame time, when one region performs display, a touch signal may be input to at least one of the remaining regions in which display is not performed, so that the display and the touch can be performed at the same time.

For example, for each of the regions, in addition to the time period in which a display is performed, a touch signal may be input to the region during a non-display time period, which is a time period other than the display time period of the region. As illustrated in FIG. 9A, a touch signal S2A is input to the region A during the time period t2-t4; a touch signal S2B is input to the region B during the time period t0-t1 and the time period t3-t4; a touch signal S2C is input to the region C during the time period t0-t2; and a touch signal S2D is input to the region D during the time period t1-t3.

The driving method given by the example illustrated in FIG. 9A can realize four times of touch within one frame, which can increase the touch time in multiples compared with a conventional solution, and also can increase the display time in one frame because the touch position detection does not additionally occupy time.

For example, as illustrated in FIG. 9A, the display signal is a negative level signal, and the touch signal is a positive level signal. For example, the display signal and the touch signal may be voltage signals of opposite polarities. Further, for example, the display signal is a negative voltage and the touch signal is a positive voltage.

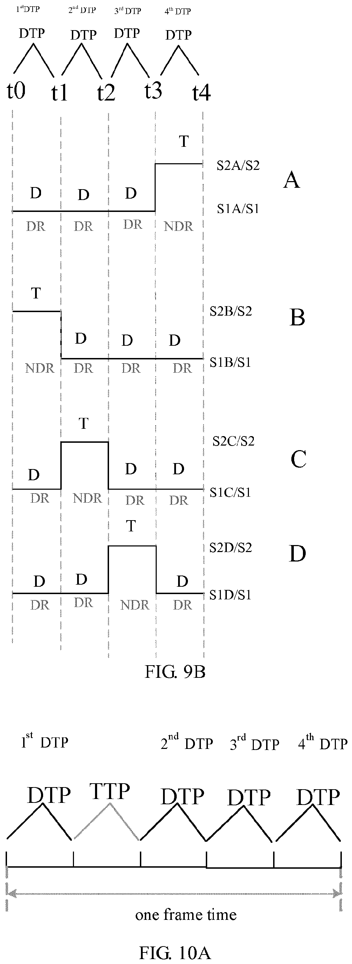

Although the touch signal S2 is a straight line in FIG. 9, it is only for purpose of illustrating the touch signal S2, and the touch signal S2 may be a pulse signal, for example, may be a positive pulse signal, so as to realize scanning of a touch signal during a touch state of each of the regions, in order to achieve detection of a touch position.

For example, one frame is a single image of a smallest unit, and one frame time is a time for displaying a single image.

For example, a touch signal may be applied to the regional electrode 12 of every region within the non-display region NDR during a display time period to improve touch precision. Further, for example, the touch signal may be applied to the regional electrode 12 of every region within the non-display region NDR during every display time period, which is described in FIG. 9A, by way of example.

FIG. 9B illustrates a driving method provided by another embodiment of the present disclosure, which can also achieve detection of a touch position during display time period in one frame.

For example, whether the region is in a touch state or not can be determined by adjusting a signal applied to the regional electrode of the region at different display time periods. If it is necessary to adjust the region to be in a touch state, a voltage input to the regional electrode can be adjusted (for example, pulled high) so that the region does not perform display, and then touch data is read.

In the embodiment of the present disclosure, the manner in which the touch is performed during the display time period may not be adopted; instead, a manner in which a touch time period (TTP) is inserted between adjacent display time periods DTP is adopted.

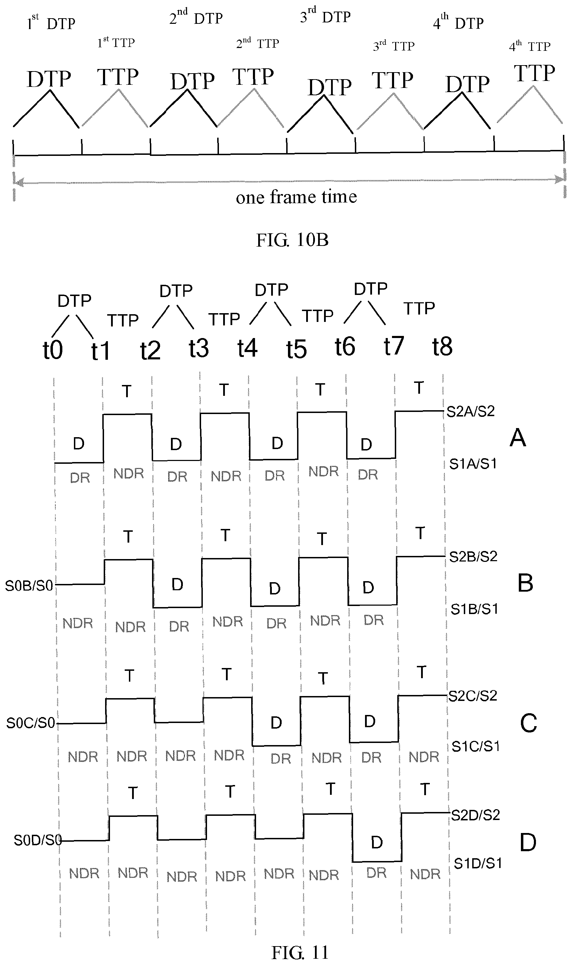

As illustrated in FIGS. 10A and 10B, a touch time period (TTP) may be inserted between any adjacent display time periods DTP, and a touch signal may be applied to the regional electrode 12 of at least one region during the touch time period TTP, so as to achieve touch position detection between adjacent display time periods in one frame.

FIG. 10A is illustrated with reference to the case where a touch time period TTP is inserted between a first display time period and a second display time period, by way of example. FIG. 10B is illustrated with reference to the case where a touch time period TTP is inserted between every two adjacent display time periods, by way of example. The touch time period TTP may also be inserted before the first display time period or after a last display time period. In FIG. 10B, after the last display time period, a touch time period TTP is further inserted, and during this touch time period TTP, a touch signal may also be applied to the regional electrode 12 of at least one region.

FIG. 11 illustrates a driving method of a touch display panel provided by an embodiment of the present disclosure, and is illustrated with reference to the case where a touch time period TTP is inserted between every two adjacent display time periods and the regional electrode of every region during each of the touch time periods is input with a touch signal, by way of example, so as to increase the number of touch reports within one frame, thereby improving touch precision. The driving method provided by the embodiment illustrated in FIG. 11 achieves four times of touch within one frame which is not limited in embodiments of the present disclosure, and the number of intra-frame touches may be other values.

As illustrated in FIG. 11, when there is a region being not scanned, a signal S0 having no voltage difference with the second electrode 111 may be input to the regional electrode 12 of this region, so that the region is in a non-display and non-touch state. The time period that is neither marked as a display state D nor marked as a touch state T may be in a non-display and non-touch state, similarly hereinafter. FIG. 11 illustrates that, when the region A is scanned, a signal S0B may be input to the regional electrode 12 of the region B, a signal S0C may be input to the regional electrode 12 of the region C, and a signal S0D may be input to the regional electrode 12 of the region D. When a signal S0 having no voltage difference with the second electrode 111 is input to every regional electrode 12, each of the regions does not emit light, and is neither in a display state nor in a touch state. For example, S0 may be 0, without limited thereto. For example, S0 includes at least one selected from the group consisting of S0B, S0C and S0D.

As illustrated in FIG. 11, according to a driving method of a touch display panel provided by an embodiment of the present disclosure, a time in which the region gate line RGT of each of the regions is scanned may be referred to as a scanning time. For example, a sum of the scanning times of the plurality of regions may constitute a display time of one frame time. The time in which each of the regions is scanned may be one display time period. For example, the display time of each of the regions may be greater than the scanning time. The time in which the regional electrode of at least one region is input with the touch signal may be referred to as a touch time period. One frame time may include a display time, and the display time includes a plurality of scanning times (display time periods). For example, one frame time may include a touch time, and the touch time may include a plurality of touch time periods. For example, the scanning time (display time period) and the touch time period of different regions may be overlapped with each other. For example, a display signal S1 may be sequentially input (in a region scanning manner) to the regional electrodes 12 of the plurality of regions 101 in one frame time.

For example, as illustrated in FIG. 11, the signal input to each of the regions in one frame time includes a portion in a form of square wave. For example, the display signal S1 is a negative voltage and the touch signal S2 is a positive voltage. The square wave includes, for example, a first signal and a second signal, one of the first signal and the second signal is a positive voltage signal and the other is a negative voltage signal. For example, within one frame time, the signal input to one region includes at least the first signal in the display time of the region, and at least one second signal in the non-display time of the region.

For example, display may be achieved by scanning the gate lines GT of every regional gate line RGT in a row scanning manner; upon scanning, by a driving circuit, the region A to allow the region A to perform display (during time period t0-t1, a first display time period), the regional electrode 12 of the region A is input with a display signal S1A, which may be, for example, a negative voltage; therefore, a voltage difference exists between the first electrode 121 and the second electrode 111, and a plurality of pixels 20 in the region A emits light to perform display.

Upon scanning, by the driving circuit, a last row of gate lines of the region A (during time period t1-t2), the regional electrodes 12 of the regions A, B, C and D may be input with a touch signal S2 (e.g., a positive voltage), respectively, so that the OLED in a corresponding region is turned off and the touch data is read once. Touch signals S2A, S2B, S2C, and S2D may be input to the regional electrodes of the regions A, B, C and D, respectively. Upon reading the touch data, the regions A, B, C and D do not emit light. The driving circuit may include, for example, a Gate Driver On Array (GOA), without limited thereto. For example, the touch signal S2 may be a voltage signal. The time period t1-t2 may be referred to as a touch time period.

After the touch data is completely read out, a scanning of the region B (during the time period t2-t3) may be performed, and a display signal S1B is input to the regional electrode 12 of the region B. For example, at this time, a display signal S1A may be input to the regional electrode 12 of the region (region A) having been scanned to perform pixel sustaining of the region A.

After the scanning of the last row of gate lines in the region B is completed, a touch signal S2 (during time period t3-t4, a touch time period) may be input to the regional electrodes 12 of the region A, the region B, the region C and the region D, respectively, so that the OLED of a corresponding region is turned off, and the touch data is read again. For example, the touch signal S2 may be a positive voltage.

Similarly, when the scanning of one region is completed, a touch time period may be inserted before the scanning of the next region is started (the touch time period is inserted between adjacent display time periods), and the touch data may be read. When reading the touch data, a touch signal S2 is input to the regional electrode 12 of a corresponding region so that the OLED is turned off without emitting light, and the scanning is moved to the next region after the touch time period. The scanning of the region C and the region D can be performed in a similar manner. The display signals input to the regional electrodes 12 of the regions A, B, C, and D may be S1A, S1B, S1C, and S1D, respectively; and the touch signals input to the regional electrodes 12 of the regions A, B, C, and D may be S2A, S2B, S2C and S2D, respectively.

As illustrated in FIG. 11, after each of the regions is scanned, at a time other than the touch time, the regional electrode 12 of each of the regions may be input with a display signal S1 to allow the region to be in the display state (pixel sustaining phase).

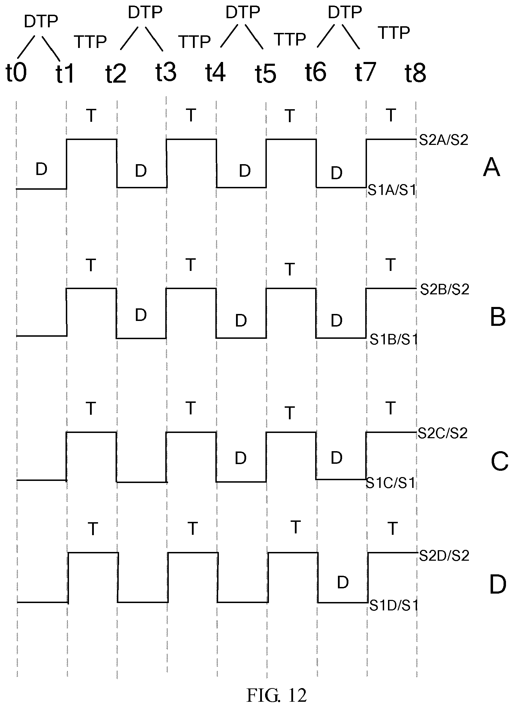

For example, when a region is scanned, the region can be referred to as a scanning region. For example, when a scanning region is scanned, the regional electrode of the scanning region is input with a display signal, and the regional electrode of at least one of the non-scanning regions may be input with a touch signal; or, it may be as illustrated in FIG. 12 that the regional electrode of at least one of the non-scanning regions is input with a display signal. For example, if the embodiment illustrated in FIG. 12 involves an image of a first frame, regions in the time periods not marked with D or T in FIG. 12 may be in a non-display and non-touch state; and if the embodiment illustrated in FIG. 12 is not an image of a first frame, regions in the time period not marked with D or T may be in a display state (a pixel sustaining phase of an image of a previous frame), without limited thereto.

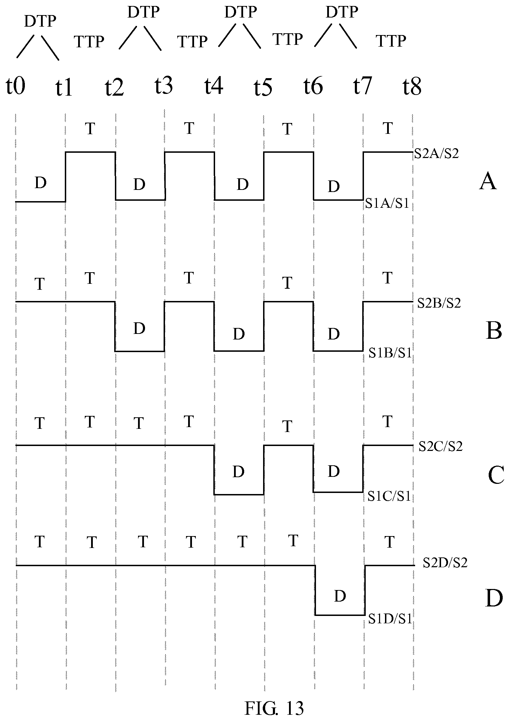

For example, as illustrated in FIG. 13, in order to further improve the touch precision, apart from inserting a touch time period between adjacent display time periods, it's also possible to, during at least one display time period, input a touch signal S2 to the regional electrode 12 of at least one region not performing display while one region is performing display (e.g., scanning), so that the OLED of a corresponding region is turned off without emitting light, and the touch data is read. For example, during the time period t0-t1, the region A is scanned, and the regional electrode 12 of the region A is input with a display signal S1A; at the same time, the regional electrode 12 of at least one of regions B, C and D is input with a touch signal S2. FIG. 13 is illustrated with reference to the case where a touch signal is input to the regional electrodes 12 of all of the regions where the scanning has not been performed, by way of example.

For example, according to the driving method of the touch display panel provided by an embodiment of the present disclosure, in order to mitigate the uneven display of image caused by difference in brightness due to IR drop (voltage drop) of the regional electrode (first electrode), it may compensate for the IR drop of the regional electrode. Different display signals may be input to the regional electrodes of different regions (absolute values of the display signals S1 input to the regional electrodes 12 of different regions may be different), respectively, to reduce the difference in brightness, so that the image can be uniformly displayed. For example, an absolute value of S1A is different from an absolute value of S1B. For example, the absolute values of the display signals S1 input to the regional electrodes 12 of different regions may be different from each other. For example, the absolute values of S1A, S1B, S1C, and S1D are different from each other.

For example, in a normal light-emitting state, different display signals S1 are provided to the regions according to the brightness of each of the regions. When a brightness of the region A is lower than that of the region D, the voltage of the display signal S1A of the region A may be appropriately lowered to adjust the brightness of the region A. For example, if the region D is close to the IC side and a display signal VSS input to the regional electrode 12 of the region D is -5 V, a display signal VSS input to the regional electrode 12 of the region A far away from the IC side may be a voltage (a voltage with a large absolute value) lower than -5V such as -6 V or -7 V.

For example, display signals S1 of different values may be input to different regions, respectively, within one frame time. For example, as illustrated in FIG. 3C, the regional electrodes 12 are connected to the second driving circuit 142 through the second wires 132, respectively; and an absolute value of the display signal applied to each of the regional electrodes 12 may be increased as the length of the second wire 132 connected thereto is increased. In the case where the second wire 132 is not provided but the first electrodes 121 are connected to the first driving circuit 141 through the first wires 131 respectively, the absolute value of the display signal may be increased as a length (an average value of the lengths of the first wires 131 in this region) of the first wire 131 is increased, which is depending on the region; and the absolute value of the display signal may also be adjusted according to the length of each of the first wires 131. For example, the absolute value of the display signal is in direct proportion to the length of the first wire.

For example, the touch display panel includes an end 01 bonded with driving circuit, and an absolute value of the display signal of a region far away from the end bonded with driving circuit is greater than an absolute value of the display signal of a region close to the end bonded with the driving circuit, so as to reduce the influence of the IR drop of the cathode.

In the driving method of the touch display panel provided by the embodiment of the present disclosure, the touch display panel is not limited to be divided into four regions of region A, region B, region C and region D, and may be divided into more rows and more columns according to the requirements of the products, so as to improve the touch accuracy and reduce the difference in brightness caused by IR drop of the cathode in each of the regions.

In the case where a dividing line between adjacent regions, e.g., a dividing line between the regions A, B, C, and D, is visible due to a time different in reading the touch data, the display signal S1 (for example, absolute values of voltages of the S1A, S1B, S1C and S1D) applied to the regional electrode 12 of each of the regions may be adjusted to eliminate the dividing line between regions visible for human eyes.

In the embodiment of the present disclosure, the time periods, for example, the time period t0-t1, the time period t1-t2, the time period t2-t3, and the like may be last for different times, which may be arranged as needed without particularly limited in the embodiments of the present disclosure.

At least one embodiment of the present disclosure further provides a touch display panel which can be driven by any of the methods described above.

For example, the touch display panel may include an OLED display panel without limited thereto, and may also be a liquid crystal display (LCD) touch display panel in which the common electrode is used as the regional electrode at the same time.

At least one embodiment of the present disclosure further provides a display device including any one of the touch display panels described above.

It should be noted that, for the purpose of clarity, in accompanying drawings for illustrating the embodiment(s) of the present disclosure, the thickness and size of a layer or a structure may be enlarged or narrowed. It should be understood that, in the case in which a component or element such as a layer, film, region, substrate or the like is referred to be "on" or "under" another component or element, it may be directly on or under the another component or element or a component or element is interposed therebetween.

Moreover, in case of no conflict, features in one embodiment or in different embodiments can be combined.

The above are only specific implementations of the present disclosure, without limiting the protection scope of the present disclosure thereto. Any changes or substitutions easily occur to those skilled in the art within the technical scope of the present disclosure should be covered in the protection scope of the present disclosure. Therefore, the protection scope of the present disclosure should be based on the protection scope of the claims.

## Claims

1. A driving method of a touch display panel, the touch display panel comprising a plurality of regions, each of the plurality of regions comprising a regional electrode,
the driving method comprising:
one frame time comprising a plurality of display time periods, during each of the plurality of display time periods, the plurality of regions comprising a display region performing display during the display time period, and a region other than the display region performing display during the display time period being a non-display region not performing display, the display region during the display time period comprising at least one region of the plurality of regions; and
during each of the plurality of display time periods, applying a display signal to the regional electrode of the display region during the display time period, wherein
the method satisfies at least one of:
during at least one display time period, the non-display region comprising at least one region, applying a touch signal to the regional electrode of the at least one region comprised in the non-display region during the display time period; and
inserting a touch time period between at least two display time periods, and applying a touch signal to the regional electrode of the at least one region.

2. The driving method of the touch display panel according to claim 1, wherein the display region varies depending on the display time period.

3. The driving method of the touch display panel according to claim 1 or 2, wherein during at least one display time period, the touch signal is applied to the regional electrode of every non-display region during the display time period.

4. The driving method of the touch display panel according to any one of claims 1 to 3, wherein the touch signal is applied to the regional electrode of every non-display region during each of the plurality of display time periods.

5. The driving method of the touch display panel according to claim 1, wherein the touch signal is applied to the regional electrode of every region during the touch time period.

6. The driving method of the touch display panel according to claim 1, wherein the touch time period is inserted between every two adjacent display time periods.

7. The driving method of the touch display panel according to claim 6, wherein the touch signal is applied to the regional electrode of every region between every two adjacent display time periods.

8. The driving method of the touch display panel according to claim 1, wherein the one frame time comprises a first display time period and a last display time period, the touch time period is inserted before the first display time period or after the last display time period.

9. The driving method of the touch display panel according to any one of claims 1 to 8, wherein the regional electrode comprises a plurality of first electrodes insulated from each other, and
the touch display panel is an organic light-emitting diode (OLED) display panel, a cathode of the OLED is used as the first electrode at the same time.

10. The driving method of the touch display panel according to claim 9, further comprising inputting different display signals to the regional electrodes of different regions during one frame time.

11. The driving method of the touch display panel according to claim 9, wherein each of the plurality of first electrodes of every regional electrode is connected to a first driving circuit through a first wire; and
an absolute value of the display signal applied to every first electrode of each of the regional electrodes is increased as a length of the first wire connected thereto is increased.

12. The driving method of the touch display panel according to claim 10, wherein every regional electrode is connected to a second driving circuit through a second wire, and
an absolute value of the display signal applied to the regional electrode is increased as a length of the second wire is increased.

13. The driving method of the touch display panel according to any one of claims 1 to 12, wherein the plurality of regions are arranged in a first direction.

14. The driving method of the touch display panel according to any one of claims 1 to 12, wherein the display signal is a negative level signal and the touch signal is a positive level signal.
